# EUROPÄISCHE PATENTSCHRIFT

(11) **EP 1 992 065 B1**
(45) Veröffentlichungstag und Bekanntmachung des Hinweises auf die Patenterteilung: **28.09.2011**
(21) Anmeldenummer: 07721999.6
(22) Anmeldetag: 08.03.2007
(51) Int. Cl.: H02P 23/14, H02M 1/12

(54) **VORRICHTUNG ZUR NACHBILDUNG DER SYMMETRISCHEN UND ASYMMETRISCHEN IMPEDANZ EINER ASYNCHRONMASCHINE**
DEVICE FOR SIMULATING THE SYMMETRICAL AND ASYMMETRICAL IMPEDANCE OF AN ASYNCHRONOUS MACHINE
DISPOSITIF POUR SIMULER L'IMPÉDANCE SYMÉTRIQUE ET ASYMÉTRIQUE D'UNE MACHINE ASYNCHRONE

(30) Priorität: 08.03.2006 DE 102006010737
(43) Veröffentlichungstag der Anmeldung: 19.11.2008
(73) Patentinhaber: Fraunhofer-Gesellschaft zur Förderung der angewandten Forschung e.V., 80686 München (DE); Technische Universität Berlin, 10623 Berlin (DE)
(72) Erfinder: SCHINKEL, Marcus, 15711 Königs Wusterhausen (DE); GUTTOWSKI, Stephan, 13189 Berlin (DE); WEBER, Stefan-Peter, D-10587 Berlin (DE)
(74) Vertreter: Gagel, Roland
(86) Internationale Anmeldenummer: PCT/DE2007/000424
(87) Internationale Veröffentlichungsnummer: WO 2007/104282

(56) Entgegenhaltungen:
- DE-A1- 4 411 149
- SCHINKEL M ET AL: "Efficient HF Modeling and Model Parameterization of Induction Machines for Time and Frequency Domain Simulations" APPLIED POWER ELECTRONICS CONFERENCE AND EXPOSITION, 2006. APEC '06. TWENTY-FIRST ANNUAL IEEE MARCH 19, 2006, PISCATAWAY, NJ, USA,IEEE, 19. März 2006 (2006-03-19), Seiten 1181-1186, XP010910095 ISBN: 0-7803-9547-6
- GRANDI G ET AL: "HIGH FREQUENCY LUMPED PARAMETER MODEL FOR AC MOTOR WINDINGS" EPE '97. 7TH. EUROPEAN CONFERENCE ON POWER ELECTRONICS AND APPLICATIONS. TRONDHEIM, SEPT. 8 - 10, 1997, EPE . EUROPEAN CONFERENCE ON POWER ELECTRONICS AND APPLICATIONS, BRUSSELS, EPE ASSOCIATION, B, Bd. VOL. 2 CONF. 7, 8. September 1997 (1997-09-08), Seiten 2578-2583, XP000792343 ISBN: 90-75815-02-6
- BOGLIETTI A ET AL: "Experimental High Frequency Parameter Identification of AC Electrical Motors" ELECTRIC MACHINES AND DRIVES, 2005 IEEE INTERNATIONAL CONFERENCE ON MAY 15, 2005, PISCATAWAY, NJ, USA,IEEE, 15. Mai 2005 (2005-05-15), Seiten 5-10, XP010854411 ISBN: 0-7803-8987-5
- WEBER S-P ET AL: "Modeling induction machines for EMC-Analysis" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20. Juni 2004 (2004-06-20), Seiten 94-98Vol1, XP010737974 ISBN: 0-7803-8399-0

## Beschreibung

### Technisches Anwendungsgebiet

Die vorliegende Erfindung betrifft eine Vorrichtung zur Nachbildung der symmetrischen und asymmetrischen Impedanz einer dreiphasigen Asynchronmaschine, insbesondere im Frequenzbereich der EMV (Elektromagnetische Verträglichkeit) von 10 kHz bis 30 MHz.

### Stand der Technik

Modelle für elektronische Bauelemente und Baugruppen sind seit Jahrzehnten für die Simulation bekannt. Dies betrifft auch diverse Modelle für Asynchronmaschinen, wie bspw. der Modellierungsansatz folgender Veröffentlichungen:
Boglietti et al., "Induction Motor High Frequency Model", in: Industry Applications Conference, 1999, 34th IAS Annual Meeting Conference Report of the IEEE, Vol. 3, 1999, Seiten 1551 bis 1558;
Grandi G. et al: "High Frequency Lumped Parameter Model for AC Motor Windings " EPE '97. 7th. European Conference on Power Electronics and Applications, Trondheim, Sept. 8 - 10, 1997, EPE Association, Brussels, Bd. 2, 7-8. September 1997 (1997-09-08), Seiten 2578-2583, XP000792343 ISBN: 90-75815-02-6;
Weber S.-P., et al: "Modeling induction machines for EMC-Analysis", Power Electronics Specialists Conference 2004. PESC 04, IEEE, Aachen, Germany 20-25 June 2004, Piscataway, NJ, USA, (2004-06-20), Seiten 94-98, Bd.1, XP010737974, ISBN: 0-7803-8399-0.

Die Parametrisierung erfolgt bei derartigen Modellen anhand der Impedanzmessung an einer nachzubildenden Maschine im Frequenzbereich. Bisher ist jedoch kein Modell einer Asynchronmaschine bekannt, das sowohl die symmetrische als auch die asymmetrische frequenzabhängige Impedanz einer Asynchronmaschine gut nachbildet und dadurch eine praktische Realisierung in Hardware ermöglicht. So ist es bspw. durch die bekannten Modelle nicht möglich, die symmetrische und zugleich die asymmetrische Impedanz ausreichend genau nachzubilden.

EMV-Filter für dreiphasige drehzahlveränderliche Antriebssysteme (Umrichter-Maschine-Systeme) werden in der Regel beim Filterhersteller eingemessen. Neben dem Umrichter benötigt der Filterhersteller dafür den entsprechenden Motor. Dies verursacht nicht nur Anschaffungskosten sondern aufgrund des hohen Gewichts und Volumens des Motors auch erhebliche logistische Kosten. So beträgt das Gewicht eines 15kW Umrichters 5kg, das Gewicht einer 15kW Asynchronmaschine hingegen 300 kg.

Die Aufgabe der vorliegenden Erfindung besteht darin, eine Vorrichtung zur Nachbildung der frequenzabhängigen Impedanz einer Asynchronmaschine anzugeben, die sowohl das symmetrische als auch das asymmetrische Verhalten der frequenzabhängigen Impedanz ausreichend nachbildet und mit einer geringen Anzahl von Bauteilen realisiert werden kann.

### Darstellung der Erfindung

Die Aufgabe wird mit der Vorrichtung gemäß Patentanspruch 1 gelöst. Vorteilhafte Ausgestaltungen der Vorrichtung sind Gegenstand der Unteransprüche oder lassen sich der nachfolgenden Beschreibung sowie dem Ausführungsbeispiel entnehmen.

Die vorgeschlagene Vorrichtung zur Nachbildung der frequenzabhängigen Impedanz einer Asynchronmaschine umfasst drei Teilschaltungen zur Nachbildung der drei Phasen der Asynchronmaschine, die jeweils einen Eingangs- und einen Ausgangsanschluss aufweisen. Jede der Teilschaltungen weist zwischen dem Eingangs- und dem Ausgangsanschluss eine Gesamtinduktivität, vorzugsweise als Reihenschaltung einer Haupt- und einer Streuinduktivität, parallel mit einem Widerstand verschaltet auf. Eingangs- und Ausgangsseite sind jeweils über eine Kapazität und einen Widerstand in Reihe mit Masse bzw. Bezugspotential verbunden. Für die Hauptinduktivitäten der Teilschaltungen ist eine magnetische Kopplung realisiert oder die Wirkung einer magnetischen Kopplung nachgebildet.

Mit dieser Ausgestaltung der Vorrichtung ist es möglich, die Impedanz, d. h. den frequenzabhängigen Widerstand, der Asynchronmaschine in einem bestimmten Frequenzbereich, vorzugsweise von 10 kHz bis 30 MHz, vollständig nachzubilden. Für die Nachbildung wird die Impedanz an der nachzubildenden Asynchronmaschine zunächst vermessen, um die erforderlichen Kennwerte der einzelnen Bauteile der Vorrichtung zu ermitteln. Unter vollständig wird hier sowohl die Impedanz bzgl. der Leitungen zueinander als auch die Impedanz der Leitungen gegen Erde bzw. Bezugspotential verstanden. Die Vorrichtung lässt sich mit einem überschaubaren Bauteilaufwand realisieren, wobei die Vorrichtung in einer vorteilhaften Ausgestaltung nur aus 24 Bauteilen besteht. Die Vorrichtung lässt sich daher wesentlich kostengünstiger herstellen und handhaben als der Originalmotor.

Der frequenzabhängige Widerstand der Asynchronmaschine hat große Auswirkungen auf die elektromagnetische Verträglichkeit eines Antriebssystems. Eine bevorzugte Verwendung der Vorrichtung besteht daher darin, die Vorrichtung anstelle der Asynchronmaschine, deren Verhalten sie nachbildet, zur Einmessung und Dimensionierung von EMV-Filtern einzusetzen. Für den Filterhersteller wird damit der Kostenaufwand deutlich verringert, da die Originalmaschine nicht mehr beschafft und transportiert werden muss.

Vorzugsweise ist bei der vorliegenden Vorrichtung der nicht magnetisch verkoppelte Induktivitätsanteil durch eine Streuinduktivität in jeder Teilschaltung nachgebildet, die in Reihe zur Hauptinduktivität geschaltet ist.

In einer bevorzugten Ausgestaltung der vorgeschlagenen Vorrichtung sind die Hauptinduktivitäten durch getrennte Kerne bzw. Spulen gebildet, die vorzugsweise jeweils zwei Wicklungen (mit entsprechend den Kennwerten gewählter Windungszahl) umfassen. Dies ermöglicht die Nachbildung der durch alle drei Phasen gebildeten Verkopplung. Dabei wirkt eine Induktivität auf zwei Phasen und verkoppelt diese. Um alle drei Phasen zu verkoppeln, werden folglich drei Induktivitäten benötigt. Jede der Induktivitäten ist gegenphasig gewickelt.

In einer weiteren Ausgestaltung der vorliegenden Vorrichtung wird der Strom durch die einzelnen Teil-schaltungen bei niedrigen Frequenzen mit einem zusätzlichen Widerstand begrenzt, der in Reihe zur Hauptinduktivität geschaltet ist. Da dieser Widerstand keinen Einfluss auf die Impedanz bei größeren Frequenzen (> 150 kHz) haben darf, wird sein Wert dementsprechend gering gewählt.

### Kurze Beschreibung der Zeichnungen

Die vorliegende Vorrichtung wird nachfolgend anhand eines Ausführungsbeispiels in Verbindung mit den Zeichnungen nochmals näher erläutert. Hierbei zeigen:
- Fig. 1: ein Ersatzschaltbild als Basis der vorliegenden Vorrichtung;
- Fig. 2: Ersatzschaltbild für die drei Haupt- induktivitäten mit drei Kernen;
- Fig. 3: ein Beispiel für ein Schaltbild der Vorrichtung;
- Fig. 4: ein Foto der Vorrichtung; und
- Fig. 5: einen Vergleich der Störspektren bei Verwendung des Originalmotors und der Nachbildung.

### Wege zur Ausführung der Erfindung

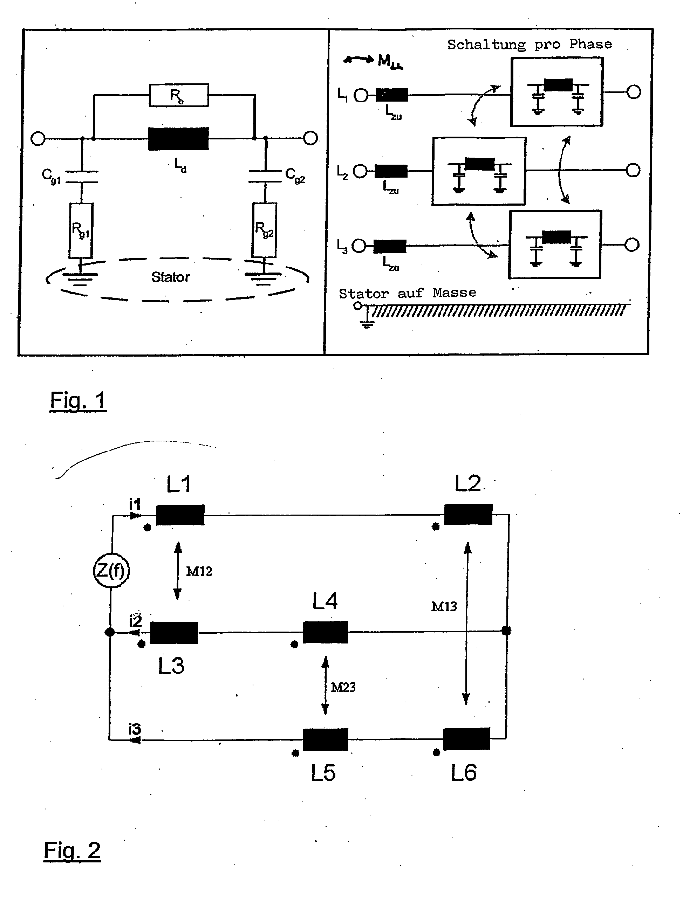

Bei der Realisierung der vorgeschlagenen Vorrichtung wurde zunächst ein Ersatznetzwerk bzw. Modell entwickelt, das in der Lage ist, die frequenzabhängige symmetrische und asymmetrische Impedanz einer Asynchronmaschine im Frequenzbereich von 10 kHz bis 30 MHz vollständig nachzubilden. Die asymmetrische Impedanz verhält sich über weite Frequenzbereiche kapazitiv, wobei im hohen Frequenzbereich eine geringere Kapazität wirksam ist als im unteren. Die symmetrische Impedanz verhält sich zunächst induktiv und bei höheren Frequenzen dann ebenfalls kapazitiv. Die symmetrisch wirksame Induktivität ist dabei größer als die asymmetrisch wirksame. Daraus wurde geschlossen, dass die drei Induktivitäten der jeweiligen Phase magnetisch verkoppelt sein müssen. Bei sehr hohen Frequenzen verhalten sich beide Impedanzen induktiv. Durch Kombination dieser Beobachtungen wurde das in Figur 1 dargestellte Ersatzschaltbild generiert. Die linke Teilabbildung der Figur bezieht sich dabei auf eine Phase, die rechte Teilabbildung auf alle drei Phasen. Die Verluste sind aus Gründen der Übersichtlichkeit nicht dargestellt.

Obwohl es sich um ein Verhaltensmodell handelt, kann doch den jeweiligen Ersatzbauteilen eine physikalische Bedeutung zugeordnet werden. So repräsentieren C_{g1} und C_{g2} die Kapazität zwischen Wicklung und Statorblechpaket. R_{g1} und R_{g2} bilden den Widerstand des Eisenpfades nach. L_{d} und M repräsentieren die magnetisch gekoppelten Induktivitäten der einzelnen Phasen und Rₑ stellt die zugehörigen Verluste dar. Zuleitungsinduktivität L_{zu} repräsentiert die Induktivität der motorinternen Anschlusskabel. Auf die Nachbildung der ohmschen Kupferverluste wird verzichtet, da ihr Einfluss im betrachteten Frequenzbereich zu vernachlässigen ist. Trotz dieser Interpretationsmöglichkeiten handelt es sich jedoch nicht um ein physikalisches Modell, da die Parametrisierung ausschließlich anhand der Impedanz, also dem Frequenzverhalten, erfolgt und eine Korrelation mit physikalischen Größen wie Geometrie nicht möglich ist.

Für die Parametrisierung des Modells werden die symmetrische und die asymmetrische Impedanz des zu modellierenden Motors gemessen. Danach werden die entsprechenden Werte aus den Messungen abgelesen und im Anschluss die Modellparameter anhand dieser Werte ermittelt. Hierzu können bspw. signifikante Punkte der gemessenen symmetrischen und asymmetrischen Impedanz betrachtet werden, die ein möglichst eindeutiges Verhalten aufweisen. Dies ist bei kapazitivem Verhalten der Fall, bei sinkender Impedanz und einer Phasenlage von -90°. Bei induktivem Verhalten steigt die Impedanz und die Phasenlage beträgt +90°. Da auf diese Weise u.U. noch nicht genug Informationen über das System zur Verfügung stehen, werden zusätzlich die Resonanzstellen ausgewertet. Hier treten Parallelresonanzen (lokales Impedanzmaximum) und Reihenresonanzen (lokales Impedanzminimum) auf. In Zusammenhang mit den vorab aus den Messungen bestimmten Kapazitäten und Induktivitäten können auf diese Weise weitere Bauteile parametrisiert werden. Zum Abschluss werden die Verluste, in Form von Widerständen, an den jeweiligen Resonanzstellen berück-sichtigt. Ausgehend von einem symmetrischen Aufbau der Asynchronmaschine wird von einer Gleichverteilung aller Parameter auf die drei Phasen ausgegangen.

Auf Basis des vorgestellten und parametrisierten Modells bzw. Ersatzschaltbildes wird im Folgenden ein Beispiel für einen Aufbau der vorliegenden Vorrichtung beschrieben. Das wesentliche Element zur Realisierung der Motornachbildung ist die Hauptinduktivität. An sie werden besondere Ansprüche gestellt, da sie sowohl im symmetrischen als auch im asymmetrischen Fall die richtige Impedanz für die Motornachbildung erzeugen muss. Benötigt wird ein dreiphasiger Transformatoraufbau, der es ermöglicht, zu jedem Zeitpunkt die hervorgerufenen Flüsse zu addieren. Der dreiphasige Transformator wird dabei in drei Drosseln mit jeweils zwei Wicklungen zerlegt, wie dies in der Figur 2 dargestellt ist. Die Flussrichtung kann dabei durch den Wicklungssinn in jeder Phase beliebig eingestellt werden, so dass sich die einzelnen Flüsse zu jedem Zeitpunkt addieren. Für die praktische Realisierung sind daher drei Spulen mit entsprechenden Kernen (für L1/L3, für L4/L5 und für L2/L6) erforderlich. Der nicht verkoppelte Anteil wird bei der vorgeschlagenen Realisierung separat mit einer Drossel nachgebildet.

Die Hauptinduktivität wird im vorliegenden Beispiel mit dem Kern W848 der Firma Vacuumschmelze realisiert. Dieser Ringkern besteht aus einem nanokristallinen Werkstoff. Der Kern zeichnet sich durch eine sehr hohe Sättigungsinduktion und sehr geringe Kernverluste aus. Für die zur Nachbildung einer 15kW Asynchronmaschine erforderliche Haupt-Induktivität von L_{M} = |M| = 2 mH und einen A_{L}-Wert des Spulenkerns von 26µH werden 11 Windungen benötigt: Auf einem Kern werden dementsprechend zwei Wicklungen mit je 11 Windungen aufgebracht.

Die Streuinduktivität L_{Str} ist mit dem Material "893" der Firma Vogt realisiert. Dieser Ringkern besteht aus Eisenpulver. Der Kern zeichnet sich durch eine sehr hohe Sättigungsinduktion und sehr geringe Kernverluste aus. Für die benötigte Induktivität von L_{Str} = L_{d} - |M| = 4,6 mH und einen A_{L}-Wert des Spulenkerns von 281µH werden 68 Windungen benötigt. Auf den Kern wird eine Wicklung mit 68 Windungen aufgebracht.

Die Kernabmessungen werden hierbei so dimensioniert, dass die Sättigung nie erreicht wird. Die Zuleitungsinduktivität L_{zu} ist mit 280 nH so klein, dass sie als Luftspule ausgeführt wird. Mit einem Durchmesser von ca. 1 cm wird die Spule gewickelt, vermessen und gekürzt, bis der benötigte Wert erreicht ist.

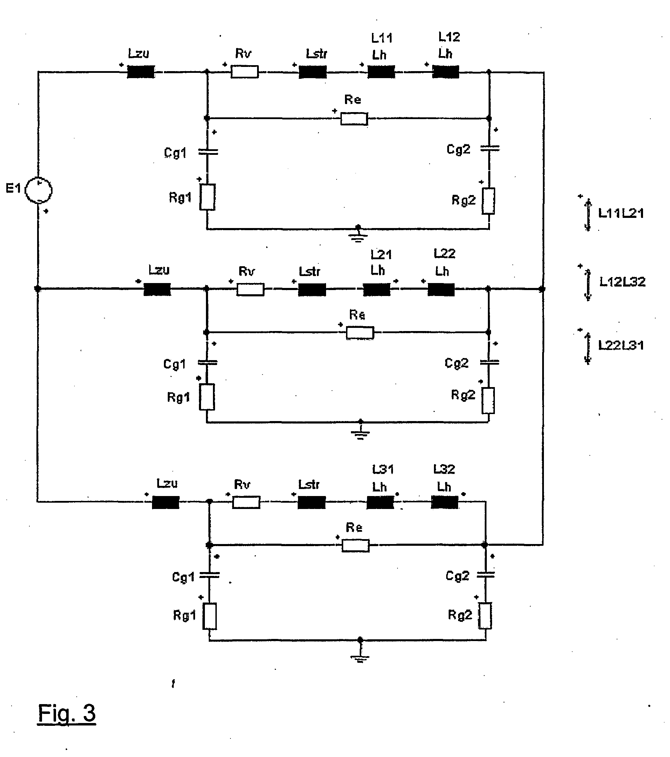

Für die Bauelemente C_{g1}, C_{g2}, R_{g1} und R_{g2} werden SMD-Bauformen benutzt, da sie selbst ein weitestgehend ideales Verhalten aufweisen. Die Kondensatoren müssen eine genügend hohe Spannungsfestigkeit aufweisen, da an ihnen die volle Betriebsspannung anliegt. Für R_{g1} und R_{g2} werden SMD-Widerstände benutzt, da deren Verlustleistung durch energiearme hochfrequente Signalanteile hervorgerufen und nicht überschritten wird. Die niederfrequenten Signalanteile werden von den jeweiligen Kondensatoren abgefangen. Da nicht immer die vorher bestimmten Werte der Widerstände verfügbar sind, kann durch geeignetes Parallelschalten von Kondensatoren bzw. Widerständen der gewünschte Wert angenähert werden. Die in Figur 3 auch ersichtlichen Widerstände Rᵥ und Rₑ sind Leistungswiderstände, da die an ihnen anfallenden Verluste erheblich sind. Durch Rᵥ (680 Ω) fließt pro Phase der gesamte Strom (maximal 0,45 A). Dies verursacht eine maximale Verlustleistung von Pᵥ = 138 W. Aus diesem Grund muss Rᵥ auf einen Kühlkörper montiert werden. Rₑ stellt die Verluste der magnetischen Bauelemente dar und ist somit für die Dämpfung der Resonanzen zuständig. Er wurde in diesem Beispiel zu 8 kΩ mit 2 W Verlustleistung experimentell dimensioniert.

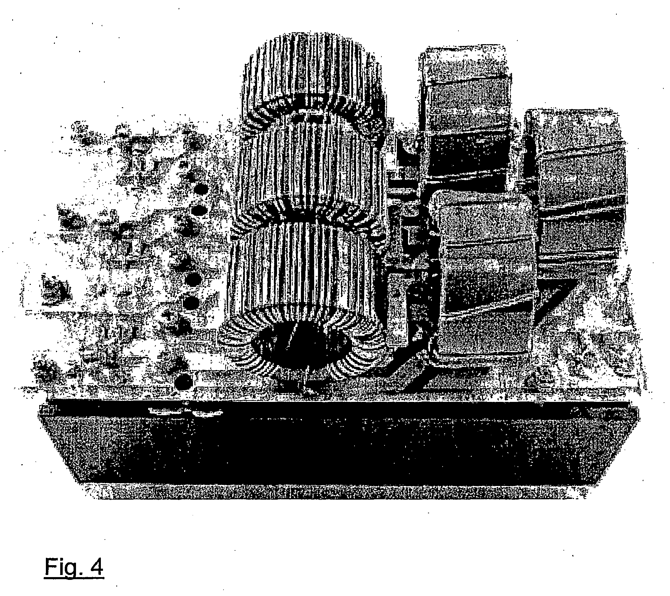

Figur 3 zeigt den vollständigen Schaltplan der Motornachbildung des vorliegenden Beispiels. Die Anordnung der Bauelemente im Layout der Motornachbildung folgt der Anordnung des Schaltplans. In dem Layout wurde darauf geachtet, dass die Leitungen so kurz wie möglich sind, um weitere Einflüsse durch die Leitungsinduktivität zu vermeiden. Im Vordergrund stehen aber ein ausreichender Isolationsabstand und eine ausreichende Strombelastbarkeit durch breite Leiterbahnen. Die Verkopplung der Streuinduktivitäten durch die geometrische Anordnung ist im Verhältnis zur Hauptinduktivität sehr gering. Figur 4 zeigt ein Foto der praktischen Nachbildung einer Asynchronmaschine gemäß dem vorliegenden Beispiel. Die komplette Vorrichtung besteht nur aus 24 Bauteilen. Auf der linken Seite befinden sich die großflächigen Schraubanschlüsse für die drei Phasen und Masse. Relativ klein sind die Zuleitungsinduktivitäten als Luftspule ausgeführt. Etwas weiter rechts befinden sich pro Phase jeweils C_{g1} und R_{g1} als SMD-Bauelemente. Es folgen die Leistungsvorwiderstände Rᵥ, von denen lediglich die Schrauben zu erkennen sind, da sie sich rückseitig auf dem Kühlkörper befinden. Dann fallen im Aufbau die drei großen Spulen für die Streuinduktivität sowie die Anordnung der drei weiteren Spulen auf der rechten Seite zur Realisierung der Hauptinduktivität auf. Zwischen den Spulengruppen befinden sich die Leistungswiderstände Rₑ. Am rechten Rand befinden sich noch C_{g2} und R_{g2}.

Mit dieser Vorrichtung wird eine 15 kW Asynchronmaschine nachgebildet. Die Originalmaschine hat ein Gewicht von ca. 300 kg. Die Nachbildung wiegt weniger als 3 kg und benötigt mit einem Volumen von 12 x 21 x 13 cm³ nur einen Bruchteil des Motorvolumens. Eine Anpassung auf andere Motorleistungsklassen ist problemlos möglich.

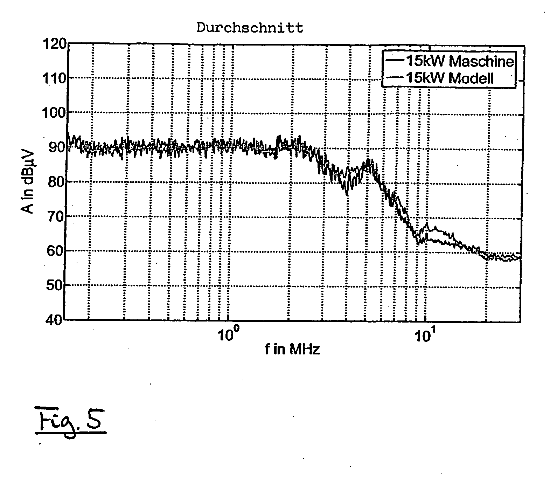

Figur 5 zeigt einen Vergleich der Störspektren bei Verwendung der nachgebildeten Asynchronmaschine und der Nachbildung, d. h. der im diesem Beispiel vorgestellten Vorrichtung. Die Messungen erfolgten in einem normgerechten Aufbau, um eine Vergleichbarkeit zu gewährleisten. Die Übereinstimmung ist sehr gut, wie aus der Vergleichsmessung leicht erkennbar ist. Die leichten Abweichungen im Bereich über 10 MHz können dabei vernachlässigt werden und haben in der Praxis keine Bedeutung. Da nur das hochfrequente Verhalten nachgebildet wird, fließt nur ein Bruchteil des Laststromes. Die Nachbildung ist entsprechend ausgelegt worden.

Mit einer derartigen Vorrichtung, die das frequenzabhängige Impedanzverhalten einer Asynchronmaschine bzw. eines Asynchronmotors nachbildet, lassen sich vorteilhaft Messungen von leitungsgeführten Störungen einer Asynchronmaschine im Frequenzbereich der EMV durchführen. Die Vorrichtung eignet sich insbesondere für Hersteller von EMV-Filtern, um die entsprechenden Filter unter Einsatz der Vorrichtung einmessen zu können.

## Patentansprüche

1. Vorrichtung zur gleichzeitigen Nachbildung der symmetrischen und asymmetrischen Impedanz einer Asynchronmaschine,
mit jeweils einer Teilschaltung pro Phase der Asynchronmaschine, die jeweils einen Eingangs- und einen Ausgangsanschluss aufweist,
wobei jede Teilschaltung zwischen dem Eingangs- und dem Ausgangsanschluss eine Gesamtinduktivität aufweist, die eingangs- und ausgangsseitig über eine Kapazität (C_{g1},C_{g2}) und einen Widerstand (R_{g1},R_{g2}) mit einem Bezugspotential verbunden ist, und wobei für eine Hauptinduktivität der Teilschaltungen eine magnetische Kopplung realisiert oder die Wirkung einer magnetischen Kopplung nachgebildet ist, **dadurch gekennzeichnet,**
**dass** die Hauptinduktivität jeder Teilschaltung jeweils durch eine Spule mit zwei Wicklungen gebildet ist, wobei der Wicklungssinn der beiden Wicklungen entgegengesetzt ist.

2. Vorrichtung nach Anspruch 1,
bei der die Gesamtinduktivität durch eine separate Haupt-(Lₕ) und Streuinduktivität (L_{Str}) in jeder Teilschaltung gebildet ist.

3. Vorrichtung nach Anspruch 1 oder 2,
bei der die Hauptinduktivität jeweils durch mehrere Kerne oder Spulen gebildet ist.

4. Vorrichtung nach einem der Ansprüche 1 bis 3,
bei dem in jeder Teilschaltung in Reihe zur Hauptinduktivität ein Widerstand geschaltet ist.

## Claims

1. A device for simultaneous simulation of the symmetrical and asymmetrical impedance of an asynchronous machine,
each having one subcircuit per phase of the asynchronous machine, each having one input terminal and one output terminal,
such that between the input terminal and the output terminal, each subcircuit has a total inductance, which is connected at the input and output terminals to a reference potential across a capacitance (C_{g1},C_{g2}) and a resistor (R_{g1},R_{g2}), and such that for a main inductance of the subcircuits, a magnetic coupling is implemented or the effect of a magnetic coupling is simulated,
**characterized in that**
the main inductance of each subcircuit is formed by a coil having two windings, wherein the two windings are wound in opposite directions of winding.

2. The device according to Claim 1,
wherein the total inductance is formed by a separate main inductance (Lₕ) and leakage inductance (Lₛₜᵣ) in each subcircuit.

3. The device according to Claim 1 or 2,
wherein the main inductance is formed by multiple cores or coils.

4. The device according to any one of Claims 1 to 3,
wherein a resistor is connected in series with the main inductance in each subcircuit.

## Revendications

1. Dispositif pour la simulation simultanée de l'impédance symétrique et de l'impédance asymétrique d'une machine asynchrone,
comprenant à chaque fois un circuit partiel par phase de la machine asynchrone, qui présente à chaque fois un branchement d'entrée et un branchement de sortie,
chaque circuit partiel présentant entre le branchement d'entrée et le branchement de sortie une inductance globale, qui est reliée côté entrée et côté sortie par une capacité (Cg1, Cg2) et une résistance (Rg1, Rg2) à un potentiel de référence, et un accouplement magnétique étant réalisé pour une inductance principale des circuits partiels ou l'effet d'un accouplement magnétique étant simulé,
**caractérisé en ce que**
l'inductance principale de chaque circuit partiel est formée respectivement par une bobine avec deux enroulements, le sens d'enroulement des deux enroulements étant opposé.

2. Dispositif selon la revendication 1,
sur lequel l'inductance globale est formée par une inductance principale (Lh) séparée et une inductance de fuite (Lstr) séparée dans chaque circuit partiel.

3. Dispositif selon la revendication 1 ou 2,
sur lequel l'inductance principale est formée à chaque fois par plusieurs noyaux ou bobines.

4. Dispositif selon l'une quelconque des revendications 1 à 3,
sur lequel une résistance est montée en série avec l'inductance principale dans chaque circuit partiel.
